# EUROPÄISCHE PATENTSCHRIFT

(11) **EP 2 658 102 B1**
(45) Veröffentlichungstag und Bekanntmachung des Hinweises auf die Patenterteilung: **07.04.2021**
(21) Anmeldenummer: 13154035.3
(22) Anmeldetag: 05.02.2013
(51) Int. Cl.: H02M 7/487

(54) **Mehrstufiger neutralpunktgeklemmter Wechselrichter**
Multilevel NPC Inverter
Onduleur multiniveau à point neutre bloqué

(30) Priorität: 02.04.2012 DE 102012205335
(43) Veröffentlichungstag der Anmeldung: 30.10.2013
(73) Patentinhaber: Dr. Johannes Heidenhain GmbH, 83301 Traunreut (DE)
(72) Erfinder: Schönlinner, Markus, 84529 Tittmoning (DE); Wichmann, Michael, 83022 Rosenheim (DE); von Le Suire, Christian, 83339 Chieming (DE)

(56) Entgegenhaltungen:
- EP-A2- 0 727 870
- EP-A2- 1 047 180
- US-A- 5 684 688

## Beschreibung

Die Erfindung betrifft einen Wechselrichter zur Einspeisung von elektrischer Energie in ein Versorgungsnetz. Wechselrichter dienen dazu, eine Gleichspannung in eine Wechselspannung umzuwandeln. Insbesondere im Bereich der Photovoltaik sind hierbei möglichst hohe Wirkungsgrade gefordert.

Solarmodule zur Umwandlung von Sonnenlicht in elektrische Energie liefern zunächst einen Gleichstrom, der vor der Einspeisung in die Netze der Energieversorger in Wechselstrom umgewandelt werden muss. Hierzu dienen Wechselrichter, wie sie beispielsweise in der US 6392907 B1 beschrieben sind. Die in den Kondensatoren eines Zwischenkreises gespeicherte elektrische Energie wird über eine Reihenschaltung aus mehreren Halbleiterschaltern an das Netz abgegeben. Bei sogenannten 3-Level-Wechselrichtern wird dabei während der positiven Halbwelle des Netzes und zur Einspeisung von Wirkleistung zwischen einem mittleren Spannungsniveau und einem oberen, positiven Spannungsniveau des Zwischenkreises hin und her geschaltet, um beispielsweise mittels Pulsweitenmodulation (PWM) die gerade benötigte Spannung anzunähern. Während der negativen Halbwelle des Netzes erfolgt die Umschaltung zwischen dem mittleren und einem negativen Spannungsniveau des Zwischenkreises. Die Einspeisung ins Netz erfolgt über eine Netzdrossel, mit deren Hilfe die durch schnelles Schalten zwischen den drei Spannungsniveaus erzeugte Wechselspannung geglättet wird. Auf diese Weise wird separat für jede Phase des Netzes eine zur Einspeisung geeignete Wechselspannung erzeugt.

Die oben zitierte US 6392907 B1 erklärt bereits ein Problem, das durch die schnellen Schaltvorgänge in einem solche Wechselrichter auftritt. Ein Wechselrichter benötigt verschiedenste Dioden und Halbleiterschalter, die in gewissen Betriebszuständen von der Zerstörung bedroht sind, nämlich wenn ein in der Diode fließender Strom durch Umpolen der Diode in Sperrrichtung zu schnell abgeschaltet wird. Denn für einen kurzen Moment nach dem Umpolen ist eine Diode in Sperrrichtung leitend, weil sich noch Ladungsträger in der Sperrzone befinden. Wegen dieses auch als Reverse-Recovery bezeichneten Effektes ist notwendig, die zeitliche Änderung des Stromes und damit die Änderung der über der Diode liegenden Spannung zu begrenzen. In der US 6392907 B1 wird hierzu eine passive Schaltung vorgeschlagen, die diese Aufgabe übernimmt.

Eine solche passive Schaltung ist aber nicht in allen Betriebszuständen optimal. So wird heutzutage von zur Einspeisung in Versorgungsnetze dienenden Wechselrichtern verlangt, dass sie bei Bedarf auch einen gewissen Anteil Blindleistung einspeisen können, um die Stabilität der Versorgungsnetze auch bei einem hohen Anteil von dezentral einspeisenden Energiequellen sicherstellen zu können. Da die Ansteuerung eines Wechselrichters zur Einspeisung von Blindleistung sich deutlich von der Ansteuerung zur Einspeisung von Wirkleistung unterscheidet, sind passive Lösungen zur Vermeidung des Reverse-Recovery-Effektes auch hinsichtlich des Wirkungsgrades eines Wechselrichters nicht optimal.

Aus der EP 1047180 A2 und aus der EP 0727870 A2 sind bereits Wechselrichter bekannt, mit denen wahlweise Wirk- und Blindleistung in ein Versorgungsnetz eingespeist werden kann.

Aufgabe der Erfindung ist es, einen Wechselrichter für die wahlweise Einspeisung von Wirk- und Blindleistung in ein Versorgungsnetz zu schaffen, bei dem in jedem Betriebszustand eine Möglichkeit zur Vermeidung des Reverse-Recovery-Effektes besteht.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Der Wechselrichter zur wahlweisen Einspeisung von Wirk- und Blindleistung in ein Versorgungsnetz weist zwei in Reihe geschaltete Zwischenkreiskondensatoren auf, deren gemeinsamer Anschluss ein mittleres Spannungsniveau zwischen einem positiven Spannungsniveau und einem negativen Spannungsniveau definiert. Er weist außerdem erste, zweite, dritte und vierte Halbleiterschalter mit jeweils parallel geschalteten Freilaufdioden auf, die seriell in dieser Reihenfolge zwischen dem positiven und dem negativen Spannungsniveau liegen, wobei der gemeinsame Anschluss des zweiten und dritten Halbleiterschalters über eine Drossel mit dem Versorgungsnetz verbunden ist. Der Wechselrichter weist außerdem in Reihe geschaltete erste und zweite Dioden auf, deren gemeinsamer Anschluss auf dem mittleren Spannungsniveau liegt, und deren jeweils zweiter Anschluss mit dem gemeinsamen Anschluss des ersten und zweiten Halbleiterschalters bzw. des dritten und vierten Halbleiterschalters verbunden ist. Gemeinsame Anschlüsse von je zwei der ersten bis vierten Halbleiterschalter sind mit zusätzlichen Drosseln verbunden, die mittels zusätzlicher Halbleiterschalter schaltbare Pfade zur Übernahme von Freilaufströmen bilden.

Der Wechselrichter wird als Dreipunkt-Wechselrichter betrieben, indem der gemeinsame Anschluss des zweiten und dritten Halbleiterschalters durch Schaltvorgänge der ersten bis vierten Halbleiterschalter entsprechend der Spannung im Versorgungsnetz entweder zwischen dem mittleren Spannungsniveau und dem positiven Spanungsniveau oder zwischen dem mittleren Spannungsniveau und dem unteren Spannungsniveau hin und her geschaltet wird, wobei Schaltvorgänge der ersten bis vierten Halbleiterschalter begleitet werden von Schaltvorgängen der zusätzlichen Halbleiterschalter, so dass die mit den gemeinsamen Anschlüssen verbundenen zusätzlichen Drosseln zeitweise anfallende Freilaufströme übernehmen.

Auf diese Weise kann sichergestellt werden, dass rechtzeitig vor kritischen Schaltvorgängen der ersten bis vierten Halbleiterschalter eine langsame Änderung der über den gefährdeten Dioden liegenden Spannung erzeugt wird, indem nämlich Freilaufströme von einer der zusätzlichen Drosseln übernommen werden und dabei eine langsamere Potentialänderung an der gefährdeten Diode bewirken. Ein Reverse-Recovery-Effekt kann so unabhängig davon, ob gerade Wirk- oder Blindleistung eingespeist wird, effektiv verhindert werden, und die jeweils verwendete Schaltung kann auf den jeweiligen Betriebszustand optimiert werden, so dass der Wechselrichter mit insgesamt gutem Wirkungsgrad betrieben werden kann. Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1a - d: eine Teilschaltung des Wechselrichters zum Einspeisen von Wirkleistung, zusammen mit den hierzu nötigen Verfahrensschritten,
- Figur 2a -: d eine Teilschaltung des Wechselrichters zum Einspeisen von Blindleistung, zusammen mit den hierzu nötigen Verfahrensschritten,
- Figur 3: alternative Realisierungsformen für einen bidirektionalen Halbleiterschalter,
- Figur 4: ein zweites Ausführungspiel für eine Teilschaltung des Wechselrichters zum Einspeisen von Blindleistung,
- Figur 5: ein drittes Ausführungspiel für eine Teilschaltung des Wechselrichters zum Einspeisen von Blindleistung,
- Figur 6: ein Schaubild zur Erklärung von Wirk- und Blindleistung.

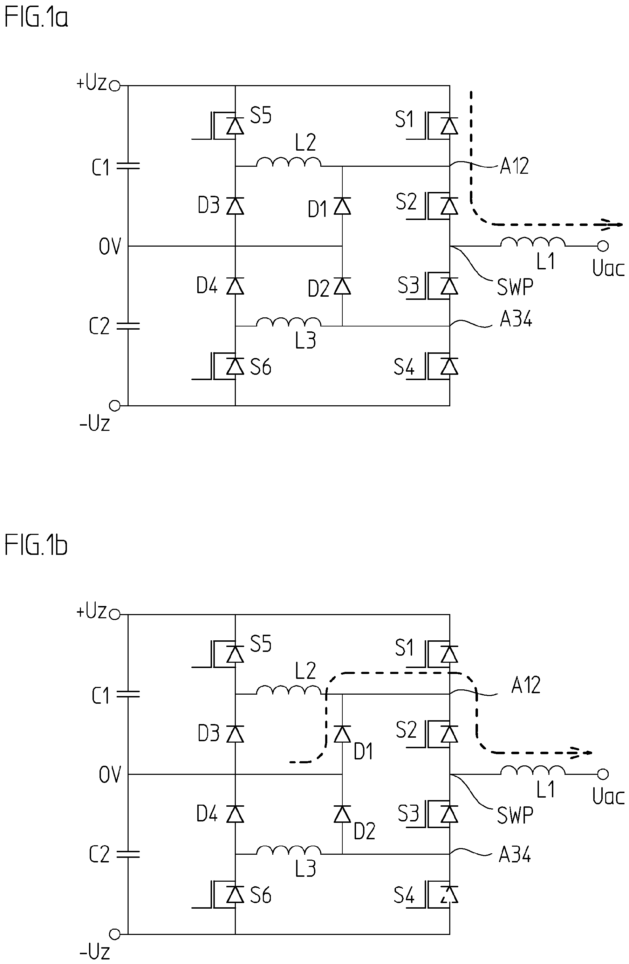

In der Figur 1a (ebenso wie in den Figuren 1b - d) ist zunächst die Grundschaltung eines 3-Level-Wechselrichters zu erkennen. Zwei in Reihe geschaltete Zwischenkreiskondensatoren C1, C2, deren gemeinsamer Anschluss ein mittleres Spannungsniveau 0V zwischen einem positiven Spannungsniveau +Uz und einem negativen Spannungsniveau -Uz definiert, bilden den Zwischenkreis, in dem elektrische Energie aus den angeschlossenen Solarmodulen gespeichert werden kann. Das mittlere Spannungsniveau 0V ist dabei nicht unbedingt gleichzusetzen mit dem Erdpotential.

Zwischen dem positiven Spannungsniveau +Uz und dem negativen Spannungsniveau -Uz sind seriell erste, zweite, dritte und vierte Halbleiterschalter S1, S2, S3, S4 mit jeweils parallel geschalteten Freilaufdioden geschaltet.

Der gemeinsame Anschluss SWP des zweiten und dritten Halbleiterschalters S2, S3 ist über eine Drossel L1 mit dem Versorgungsnetz Uac verbunden.

Der gemeinsame Anschluss zweier in Reihe geschalteter erster und zweiter Dioden D1, D2 ist mit dem mittleren Spannungsniveau 0V verbunden, der zweite Anschluss der ersten Diode D1 ist mit dem gemeinsamen Anschluss des ersten und zweiten Halbleiterschalters S1, S2 verbunden, der zweite Anschluss der zweiten Diode D2 ist mit dem gemeinsamen Anschluss des dritten und vierten Halbleiterschalters S3, S4 verbunden.

Während einer positiven Halbwelle im Netz Uac kann nun durch Öffnen der Schalter S3 und S4 und schließen des Schalters S2, sowie durch getakteten Betrieb des Schalters S1 am gemeinsame Anschluss SWP des zweiten und dritten Halbleiterschalters S2, S3 zwischen dem mittleren Spannungsniveau 0V und dem oberen Spannungsniveau +Uz hin und her geschaltet werden. Ist S1 geschlossen, sperrt D1 und SWP liegt auf +Uz. Ist S1 geöffnet, liegt SWP über D1 auf 0V. Die Ansteuerung von S1 kann dabei zum Beispiel mit einer Pulsweitenmodulation (PWM) erfolgen, so dass im zeitlichen Mittel eine Spannung eingestellt werden kann, die der Netzspannung derart folgt, dass sich ein annähernd sinusförmiger Wechselstrom in der Drossel L1 einstellt und an das Netz abgegeben wird. Anders gesagt filtert die Drossel L1 die hohe Schaltfrequenz (PWM-Frequenz, üblicher Weise einige kHz), mit der der erste Halbleiterschalter S1 getaktet wird, und glättet netzseitig die schnelle Umschaltung zwischen den beiden Spannungsniveaus 0V und +Uz zu einem sinusförmigen Stromverlauf.

Ganz analog lässt sich während der negativen Halbwelle der Netzspannung ein sinusförmiger Stromverlauf einstellen, indem bei geöffneten Schaltern S1, S2 und geschlossenem Schalter S3 der Schalter S4 nach einem PWM-Muster getaktet wird.

Wie gerade erläutert, wird während einer positiven Halbwelle des Netzes Uac der erste Halbleiterschalter S1 getaktet, während der zweite Halbleiterschalter S2 dauerhaft geschlossen bleibt. In der Figur 1a erkennt man, dass dann bei geschlossenem S1 ein Strom vom positiven Spannungsniveau +Uz über die Drossel L1 ins Netz fließt. Fließt bei positiver Netzspannung Strom aus dem positiven Spannungsniveau ins Netz, so haben Strom und Spannung gleiches Vorzeichen, es wird Wirkleistung ans Netz abgegeben.

In Figur 1b ist die Situation nach dem Öffnen des ersten Halbleiterschalters S1 dargestellt. Der Strom durch L1 wird ab dem Moment des Öffnens von S1 als Freilaufstrom aus dem mittleren Spannungsniveau 0V gezogen und fließt über D1 und S2. Würde man nun S1 im nächsten Schritt einfach wieder schließen, würde D1 nicht sofort sperren, sondern wäre wegen des Reverse-Recovery-Effektes für einen kurzen Moment leitend. Durch die hohe Spannungsdifferenz zwischen 0V und +Uz (einige 100V in einer typischen Photovoltaik-Anlage) würde die Diode D1 stark belastet.

In der Figur 1a (ebenso wie in den Figuren 1b - d) ist nun außerdem die Schaltungserweiterung dargestellt, die im Falle der Abgabe von Wirkleistung eine Belastung von Dioden durch den Reverse-Recovery-Effekt vermeiden kann.

Hierzu ist der gemeinsame Anschluss A12 des ersten und zweiten Halbleiterschalters S1, S2 mit einer zweiten Drossel L2 verbunden, deren zweiter Anschluss über eine dritte Diode D3 mit dem mittleren Spannungsniveau 0V und über einen fünften Halbeiterschalter S5 mit dem positiven Spannungsniveau +Uz verbunden ist. Ebenso ist der gemeinsame Anschluss A34 des dritten und vierten Halbleiterschalters S3, S4 mit einer dritten Drossel L3 verbunden, deren zweiter Anschluss über eine vierte Diode D4 mit dem mittleren Spannungsniveau 0V und über einen sechsten Halbeiterschalter S6 mit dem negativen Spannungsniveau -Uz verbunden ist.

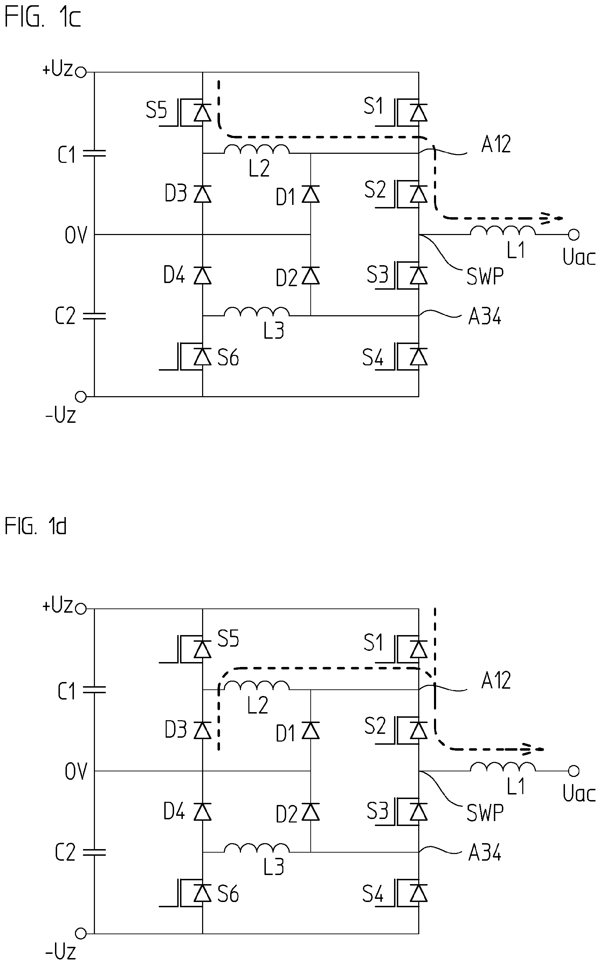

Wenn wie in Figur 1b der Freilaufstrom aus dem mittleren Spannungsniveau 0V über D1, S2 und L1 ins Netz Uac fließt, wird im nächsten Schritt nicht der Schalter S1 geschlossen, sondern zunächst der bis dahin offene fünfte Halbleiterschalter S5, so dass der in diesem Moment fließende Freilaufstrom wie in der Figur 1c dargestellt von der zweiten Drossel L2 über den fünften Halbleiterschalter S5 vom positiven Spannungsniveau +Uz kommend kontinuierlich ansteigend übernommen wird. Der gemeinsame Anschluss A12 von erstem und zweitem Halbleiterschalter S1, S2 wird so wieder auf das oder nahe an das positive Spannungsniveau +Uz gebracht, bevor dann der erste Halbleiterschalter S1 erneut geschlossen und der fünfte Halbleiterschalter S5 wieder geöffnet wird.

Wie in Figur 1d dargestellt fließt dann ein abklingender Freilaufstrom durch L2, der über D3 aus dem mittleren Spannungsniveau 0V gespeist wird. Außerdem fließt wieder ein Strom aus dem positiven Spannungsniveau +Uz ins Netz, der Zyklus beginnt von neuem.

Entscheidend ist also, dass hier vor dem erneuten Einschalten von S1 kurzzeitig der zusätzliche fünfte Halbleiterschalter S5 geschlossen wurde, und somit ein Freilaufstrom, der zunächst über D1 floss, von der zusätzlichen Drossel L2 übernommen wurde. Der langsam ansteigende Strom durch diese Drossel sorgt für einen langsamen Anstieg des Potentials am gemeinsamen Anschluss A12, und vermeidet somit den Reverse-Recovery-Effekt in der Diode D1 beim erneuten Schließen von S1.

Ganz analog sind die Bedingungen und Verfahrensschritte beim Betrieb des Wechselrichters während einer negativen Halbwelle des Netzes Uac.

Zunächst fließt bei geschlossenem S4 Strom vom Netz zum negativen Spannungsniveau -Uz, es wird also wieder Wirkleistung ans Netz abgegeben. Nach dem Öffnen von S4 fließt ein Freilaufstrom über D2 zum mittleren Spannungsniveau 0V. Ein sofortiges erneutes Schließen von S4 würde D2 wegen des Reverse-Recovery-Effektes stark belasten, daher wird zunächst S6 geschlossen und der Freilaufstrom von L3 übernommen. Der gemeinsame Anschluss A34 wird so wieder langsam auf das negative Potential -Uz geladen, bevor S4 geschlossen und S6 zeitgleich wieder geöffnet wird. Ein abklingender Freilaufstrom kann dann noch über D4 fließen.

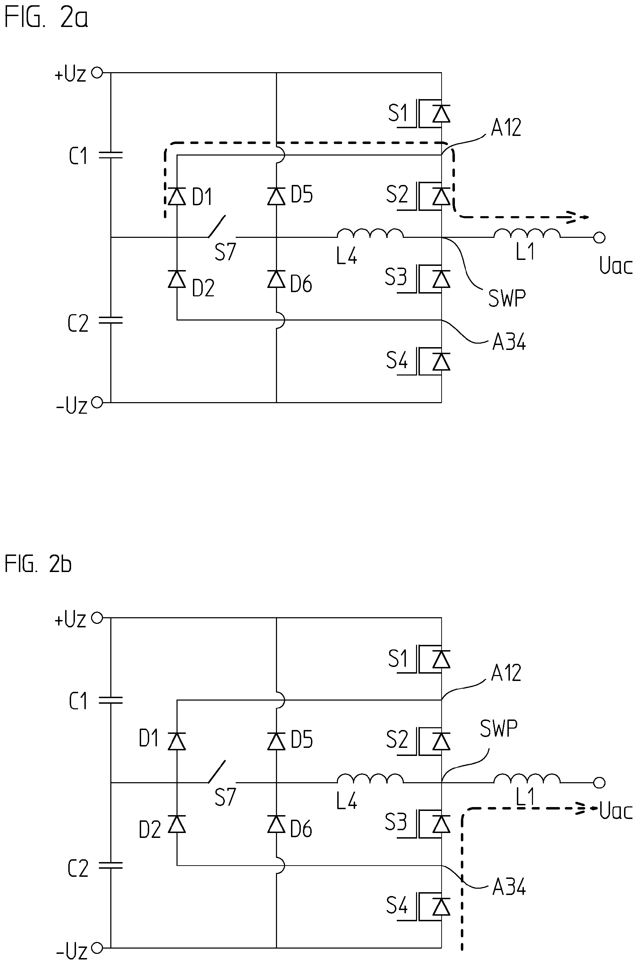

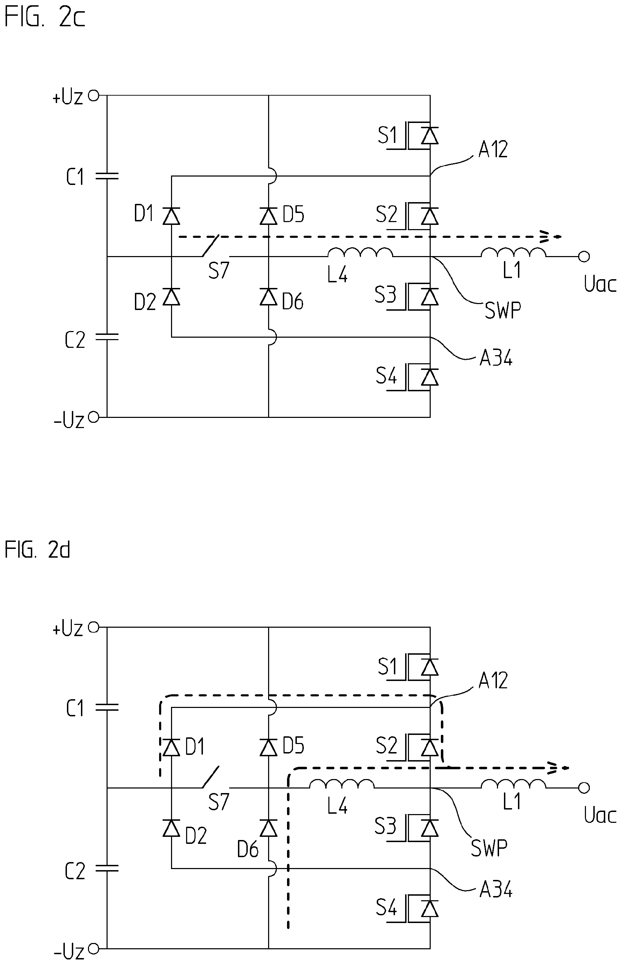

In den Figuren 1a - 1d wurden die Verhältnisse während der Einspeisung von Wirkleistung dargestellt. In den Figuren 2a - 2d sind nun die Verhältnisse bei der Einspeisung von Blindleistung gezeigt. Einspeisung von Blindleistung bedeutet, dass bei positiver Netzspannung ein Strom vom Netz Uac zum Wechselrichter fließt, bzw. bei negativer Netzspannung ein Strom vom Wechselrichter ins Netz fließt.

Während der Abgabe von Blindleistung sind andere Dioden des Wechselrichters gefährdet, weswegen für diesen Fall auch eine andere Schaltungserweiterung nötig ist. Auch wenn die Erweiterungen der Grundschaltung eines 3-Level-Wechselrichters für die beiden Betriebszustände "Wirkleistung" und "Blindleistung" in den Figuren 1a - d bzw. 2a - d der Übersichtlichkeit halber getrennt dargestellt sind, so sind sie doch in einer einzigen Schaltung realisiert und werden je nach Bedarf mittels der in den Schaltungserweiterungen enthalten zusätzlichen Halbleiterschaltern aktiviert.

Gemäß einer besonders einfachen Schaltungserweiterung zur Übernahme von Freilaufströmen während der Abgabe von Blindleistung ist der gemeinsame Anschluss SWP des zweiten und dritten Halbleiterschalters S2, S3 mit einer vierten Drossel L4 verbunden, deren zweiter Anschluss über einen siebten Halbleiterschalter S7 mit dem mittleren Spannungsniveau 0V und über eine fünfte bzw. sechste Diode D5, D6 mit dem positiven Spannungsniveau +Uz bzw. mit dem negativen Spannungsniveau -Uz verbunden ist, so dass die fünfte und sechste Diode in Reihe und in Sperrrichtung zwischen dem positiven und negativen Spannungsniveau +Uz, -Uz geschaltet sind.

Analog zu den Figuren 1a - d ist in den Figuren 2a - d die Ansteuerung des Wechselrichters dargestellt, in diesem Fall bei der Einspeisung von Blindleistung während der negativen Halbwelle des Netzes Uac.

Zur Einspeisung von Blindleistung während der negativen Halbwelle des Netzes Uac sind S1, S3 und S4 geöffnet, S2 wird getaktet betrieben.

Im ersten, in der Figur 2a dargestellten Schritt fließt Strom durch die Drossel L1 ins Netz Uac, während dort negatives Potential herrscht. Dieser Strom wird vom mittleren Potential 0V des Zwischenkreises gezogen und fließt über D1 und den geschlossenen zweiten Halbleiterschalter S2. Im nächsten Schritt gemäß Figur 2b wird S2 geöffnet, der Freilaufstrom wird dann vom negativen Potential -Uz über die dem dritten bzw. vierten Halbleiterschalter S3, S4 parallel geschalteten Freilaufdioden gezogen.

Zum Ende dieser zweiten Phase liegt SWP auf -Uz. Würde man nun ohne weitere Maßnahmen S2 wieder schließen und SWP damit hart auf das mittlere Spannungsniveau 0V schalten, könnten die beiden Freilaufdioden von S3 und S4 wegen des Reverse-Recovery-Effektes nicht sofort sperren - es bestünde eine leitende Verbindung zwischen 0V und -Uz. Die Freilaufdioden würden zerstört.

Daher wird im dritten, in Figur 2c dargestellten Schritt, zunächst der bis dahin geöffnete siebte Halbleiterschalter S7 geschlossen. Der Freilaufstrom durch L1 wird dann langsam ansteigend von L4 übernommen, und das Potential von SWP langsam auf das mittlere Spannungsniveau 0V angehoben.

Erst dann wird S2 wieder geschlossen und S7 zeitgleich geöffnet, was nun erneut einen Strom aus dem mittleren Potential 0V über D1 und S2 fließen lässt, außerdem klingt der Strom durch L4 - nun von -Uz über D6 kommend - ab, und die in Figur 2a dargestellte Phase beginnt erneut.

Für die Einspeisung von Blindleistung bei positivem Potential im Netz Uac gilt: Strom fließt nun durch L1 in den Wechselrichter. S1, S2 und S4 sind geöffnet, S3 wird getaktet betrieben, um z.B. über ein PWM-Verfahren die nötige Spannung einzustellen. Der Freilauf nach dem Öffnen von S3 fließt über die Freilaufdioden von S1 und S2, so dass sich SWP auf +Uz lädt. Vor dem erneuten Schließen von S3 wird S7 geschlossen, um über L4 ein langsames absenken des Potentials an SWP auf 0V zu erreichen. Erst dann wird S3 geschlossen und S7 zeitgleich geöffnet, der Freilaufstrom in L4 klingt über D5 von +Uz kommend ab, der Zyklus beginnt von neuem.

Versieht man also die Grundschaltung eines 3-Level-Wechselrichters mit den Schaltungserweiterungen der Figuren 1a bzw. 2a, so erhält man einen Wechselrichter, mit dem sowohl Wirkleistung als auch Blindleistung in ein Netz eingespeist werden können, indem durch eine aktive Ansteuerung der Schaltungserweiterung eine Belastung von Dioden durch den Reverse-Recovery-Effekt vermieden werden kann. Die jeweils nicht benötigte und damit nicht angesteuerte Erweiterung ist inaktiv und beeinträchtigt den Wirkungsgrad des Wechselrichters nicht unnötig.

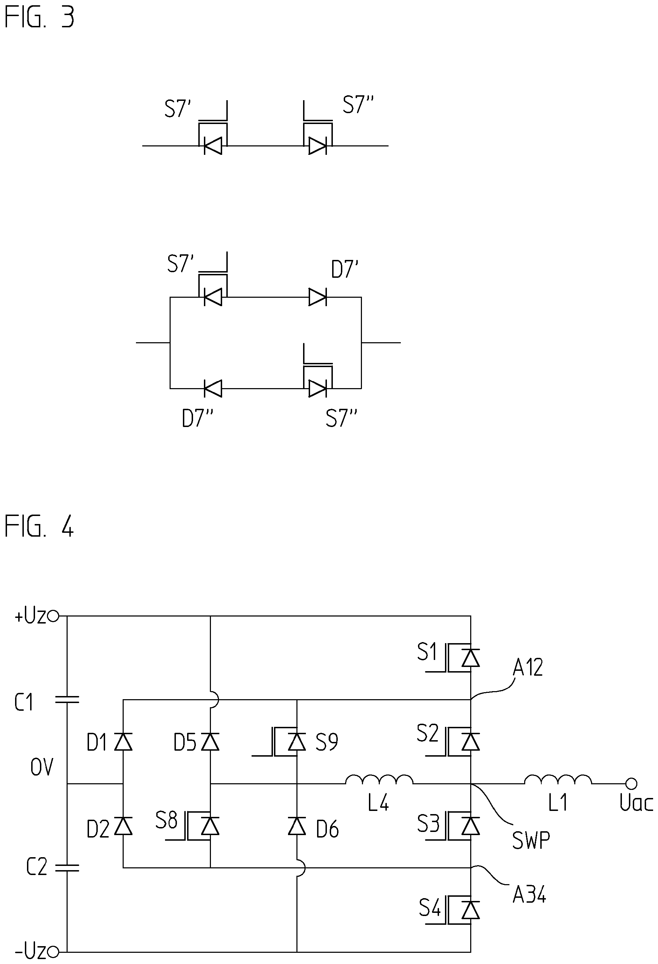

Der siebte Halbleiterschalter S7, mit dem die Schaltungserweiterung der Figuren 2a - d gesteuert wird, ist als bidirektionaler Schalter auszuführen. Hierzu sind in der Figur 3 zwei verschiedene Varianten angegeben. Einmal (obere Schaltung) sind zwei MOSFETs S7' und S7" gegensinnig in Serie geschaltet. Ist nur ein Schalter leitend, funktioniert der Gesamtschalter als Diode. Um die Diodeneigenschaft noch zu verbessern, kann auch (untere Schaltung) eine antiparallele Schaltung zweier MOSFETs S7', S7" verwendet werden, die außerdem noch in Serie jeweils eine Diode gegensinnig zur internen Bodydiode des jeweiligen MOSFETs aufweisen.

In der Figur 4 ist eine erste Alternative für die Schaltungserweiterung gemäß der Figuren 2a - d gezeigt. Der gemeinsame Anschluss SWP des zweiten und dritten Halbleiterschalters S2, S3 ist mit einer vierten Drossel L4 verbunden, deren zweiter Anschluss über einen achten Halbleiterschalter S8 und über die zweite Diode D2, sowie über einen neunten Halbleiterschalter S9 und über die erste Diode D1 mit dem mittleren Spannungsniveau 0V verbunden ist. Dieser zweite Anschluss der vierten Drossel ist außerdem über eine fünfte bzw. sechste Diode D5, D6 mit dem positiven Spannungsniveau +Uz bzw. negativen Spannungsniveau -Uz verbunden, wobei die fünfte und sechste Diode in Reihe und in Sperrrichtung zwischen dem positiven und negativen Spannungsniveau +Uz, -Uz geschaltet sind.

Die Ansteuerung dieser alternativen Schaltungserweiterung zur Einspeisung von Blindleistung erfolgt analog zur Ansteuerung im Falle der Figuren 2a - d. Während dort nach dem Schließen von S7 der Freilaufstrom durch L4 direkt aus dem mittleren Potential 0V gezogen wurde, fließt der Freilaufstrom hier über D1, S9 und L4 ins Netz (während der negativen Halbwelle des Netzes Uac), bzw. über L4, S8 und D2 aus dem Netz zum mittleren Potential 0V (während der positiven Halbwelle des Netzes Uac). Entsprechend wird also während der negativen Halbwelle S9 getaktet betätigt, während der positiven Halbwelle S8.

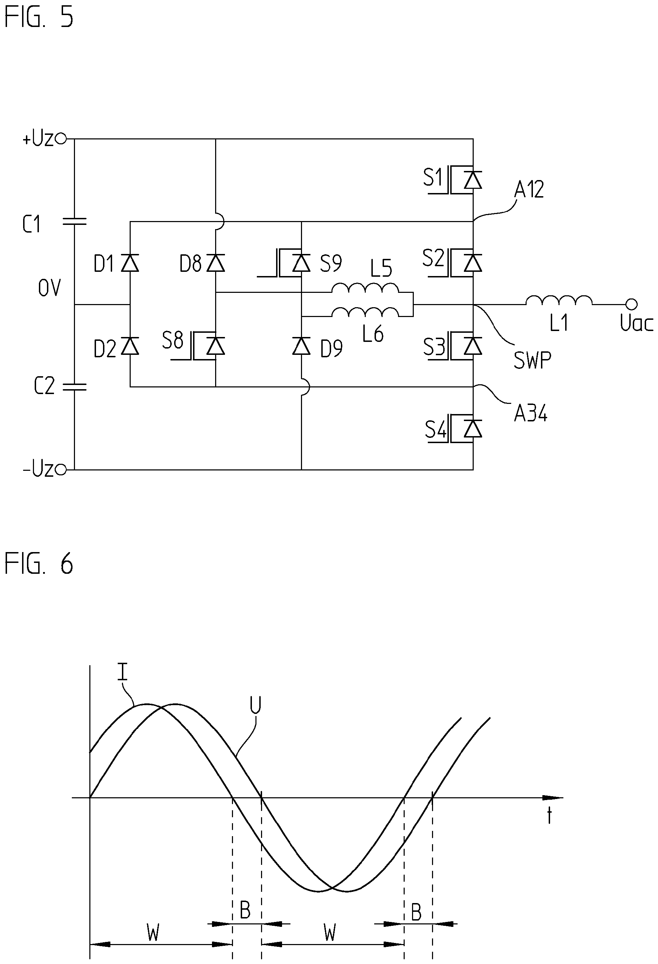

Eine weitere Alternative zur Schaltungserweiterung nach den Figuren 2a - d bzw. Figur 4 ist in Figur 5 gezeigt. Hier ist der gemeinsame Anschluss SWP des zweiten und dritten Halbleiterschalters S2, S3 mit einer fünften Drossel L5 und einer sechsten Drossel L6 verbunden, wobei der zweite Anschluss der fünften Drossel L5 über einen achten Halbleiterschalter S8 und über die zweite Diode D2 mit dem mittleren Spannungsniveau 0V und über eine achte Diode D8 mit dem positiven Spannungsniveau +Uz verbunden ist, und wobei der zweite Anschluss der sechsten Drossel L6 über einen neunten Halbleiterschalter S9 und über die erste Diode D1 mit dem mittleren Spannungsniveau 0V und über eine neunte Diode D9 mit dem negativen Spannungsniveau -Uz verbunden ist.

Mit dieser Abänderung, die ausgehend von der Variante der Figur 4 im Wesentlichen aus einer doppelten Ausführung der zusätzlichen Drossel L4 besteht, werden Probleme mit dem Reverse-Recovery-Effekt vermieden, die sich in der Schaltungserweiterung gemäß Figur 4 ergeben können, wenn S8 und S9 als MOSFETs ausgebildet sind. Entsprechend fließt der Freilaufstrom bei der Einspeisung von Blindleistung während der negativen Halbwelle im Netz über D1, S9 und L6 vom mittleren Niveau 0V ins Netz, und während der positiven Halbwelle über L5, S8 und D2 aus dem Netz zum mittleren Niveau.

Es sei noch einmal erwähnt, dass die in den Figuren 1a - d erklärte Schaltungserweiterung zur Einspeisung von Wirkleistung kombiniert werden muss mit einer der in den Figuren 2a - d, 4 oder 5 erklärten Alternativen für eine Schaltungserweiterung zur Einspeisung von Blindleistung.

Die Figur 6 erklärt kurz die Zusammenhänge der Einspeisung von Wirk- und Blindleistung. Sind Strom I und Spannung U im Netz genau in Phase, so wird nur Wirkleistung transportiert. Wirken jedoch Induktivitäten bzw. Kapazitäten im Netz, so sind Strom I und Spannung U wie in Figur 6 dargestellt nicht mehr Phasengleich, sondern um einen bestimmten Phasenwinkel gegeneinander verschoben. Üblicherweise ist dieser Phasenwinkel der gegenseitigen Verschiebung nur wenige Grad groß, so dass in den größeren Bereichen W Strom und Spannung das gleiche Vorzeichen haben. In den Bereichen B sind die Vorzeichen jedoch unterschiedlich, hier dreht sich also die Richtung des Energietransportes um. Es wird also Wirk- und Blindleistung transportiert. Im zeitlichen Verlauf der Figur 6 sind also 4 verschiedene Zustände zu erkennen, die jeweils eine unterschiedliche Betriebsart des Wechselrichters notwendig machen. Zunächst wird bei positiver Halbwelle der Netzspannung U Strom in positiver Richtung in das Netz eingespeist (positiver Leistungsbeitrag, hier als Wirkleistung bezeichnet), dann bei positiver Netzspannung die Stromrichtung umgekehrt (negativer Leistungsbeitrag, hier als Blindleistung bezeichnet), sodann bei negativer Netzspannung Strom weiterhin in negativer Richtung Netz entnommen (positiver Leistungsbeitrag) und zuletzt bei negativer Netzspannung die Stromrichtung wiederum umgekehrt (negativer Leistungsbeitrag). Die jeweilige Ansteuerung aller Halbleiterschalter des Wechselrichters für jede Betriebsart wurde oben erklärt. Während einer Periode des Netzes kommen also nacheinander alle vier Betriebsarten zum Einsatz.

Als Halbleiterschalter S1 - S9 können z.B. MOSFETs , IGBTs, SiC-MOSFETs oder SiC-JFETs verwendet werden, die gegebenenfalls mit einer separaten Freilaufdiode gepaart werden müssen.

Alle in den Figuren 1a - d, 2a - d, 4 und 5 gezeigten Schaltungen betrafen die Einspeisung in eine Netzphase. Für ein mehrphasiges Netz wird die Schaltung nach den Zwischenkreiskondensatoren entsprechend mehrfach ausgeführt.

## Patentansprüche

1. Wechselrichter zur wahlweiser Einspeisung von Wirk- und Blindleistung in ein Versorgungsnetz, mit zwei in Reihe geschalteten Zwischenkreiskondensatoren (C1, C2), deren gemeinsamer Anschluss ein mittleres Spannungsniveau (0V) zwischen einem positiven Spannungsniveau (+Uz) und einem negativen Spannungsniveau (-Uz) definiert, sowie mit ersten, zweiten, dritten und vierten Halbleiterschaltern (S1, S2, S3, S4) mit jeweils parallel geschalteten Freilaufdioden, die seriell in dieser Reihenfolge zwischen dem positiven und dem negativen Spannungsniveau liegen, wobei der gemeinsame Anschluss (SWP) des zweiten und dritten Halbleiterschalters (S2, S3) über eine Drossel (L1) mit dem Versorgungsnetz (Uac) verbunden ist, sowie mit in Reihe geschalteten ersten und zweiten Dioden (D1, D2), deren gemeinsamer Anschluss auf dem mittleren Spannungsniveau (0V) liegt, und deren jeweils zweiter Anschluss mit dem gemeinsamen Anschluss des ersten und zweiten Halbleiterschalters (S1, S2) bzw. des dritten und vierten Halbleiterschalters (S3, S4) verbunden ist, **dadurch gekennzeichnet, dass** gemeinsame Anschlüsse (A12, SWP, A34) von je zwei der ersten bis vierten Halbleiterschalter (S1, S2, S3, S4) mit zusätzlichen Drosseln (L2, L3, L4, L5) verbunden sind, die mittels zusätzlicher Halbleiterschalter (S5, S6, S7, S8, S9) schaltbare Pfade zur Übernahme von Freilaufströmen bilden, und dass zur Übernahme von Freilaufströmen während der Abgabe von Wirkleistung der gemeinsame Anschluss (A12) des ersten und zweiten Halbleiterschalters (S1, S2) mit einer zweiten Drossel (L2) verbunden ist, deren zweiter Anschluss über eine dritte Diode (D3) mit dem mittleren Spannungsniveau (0V) und über einen fünften Halbeiterschalter (S5) mit dem positiven Spannungsniveau (+Uz) verbunden ist, und dass der gemeinsame Anschluss (A34) des dritten und vierten Halbleiterschalters (S3, S4) mit einer dritten Drossel (L3) verbunden ist, deren zweiter Anschluss über eine vierte Diode (D4) mit dem mittleren Spannungsniveau (0V) und über einen sechsten Halbeiterschalter (S6) mit dem negativen Spannungsniveau (-Uz) verbunden ist..

2. Wechselrichter nach Anspruch 1, **dadurch gekennzeichnet, dass** zur Übernahme von Freilaufströmen während der Abgabe von Blindleistung der gemeinsame Anschluss (SWP) des zweiten und dritten Halbleiterschalters (S2, S3) mit einer vierten Drossel (L4) verbunden ist, deren zweiter Anschluss über einen siebten Halbleiterschalter (S7) mit dem mittleren Spannungsniveau (0V) und über eine fünfte bzw. sechste Diode (D5, D6) mit dem positiven Spannungsniveau (+Uz) bzw. negativen Spannungsniveau (-Uz) verbunden ist, wobei die fünfte und sechste Diode in Reihe und in Sperrrichtung zwischen dem positiven und negativen Spannungsniveau (+Uz, -Uz) geschaltet sind.

3. Wechselrichter nach Anspruch 1, **dadurch gekennzeichnet, dass** der gemeinsame Anschluss (SWP) des zweiten und dritten Halbleiterschalters (S2, S3) mit einer vierten Drossel (L4) verbunden ist, deren zweiter Anschluss über einen achten Halbleiterschalter (S8) und über die zweite Diode (D2), sowie über einen neunten Halbleiterschalter (S9) und über die erste Diode (D1) mit dem mittleren Spannungsniveau (0V) verbunden ist, und außerdem über eine fünfte bzw. sechste Diode (D5, D6) mit dem positiven Spannungsniveau (+Uz) bzw. negativen Spannungsniveau (-Uz) verbunden ist, wobei die fünfte und sechste Diode in Reihe und in Sperrrichtung zwischen dem positiven und negativen Spannungsniveau (+Uz, -Uz) geschaltet sind.

4. Wechselrichter nach Anspruch 1, **dadurch gekennzeichnet, dass** der gemeinsame Anschluss (SWP) des zweiten und dritten Halbleiterschalters (S2, S3) mit einer fünften Drossel (L5) und einer sechsten Drossel (L6) verbunden ist, wobei der zweite Anschluss der fünften Drossel (L5) über einen achten Halbleiterschalter (S8) und über die zweite Diode (D2) mit dem mittleren Spannungsniveau (0V) und über eine achte Diode (D8) mit dem positiven Spannungsniveau (+Uz) verbunden ist, und wobei der zweite Anschluss der sechsten Drossel (L6) über einen neunten Halbleiterschalter (S9) und über die erste Diode (D1) mit dem mittleren Spannungsniveau (0V) und über eine neunte Diode (D9) mit dem negativen Spannungsniveau (-Uz) verbunden ist.

5. Wechselrichter nach einem der vorhergehenden Ansprüche, **dadurch gekennzeichnet, dass** die Zwischenkreiskondensatoren (C1, C2) aus einer Photovoltaikanlage gespeist werden.

## Claims

1. Inverter for selectively supplying active power and reactive power to a power supply system, having two intermediate circuit capacitors (C1, C2) connected in series, the common terminal of which defines an average voltage level (0V) between a positive voltage level (+Uz) and a negative voltage level (-Uz), and having first, second, third and fourth semiconductor switches (S1, S2, S3, S4) with free-wheeling diodes respectively connected in parallel, which semiconductor switches are arranged in series in this order between the positive and the negative voltage level, wherein the common terminal (SWP) of the second and third semiconductor switch (S2, S3) is connected to the power supply system (Uac) by way of a choke (L1), and having first and second diodes (D1, D2) connected in series, the common terminal of which is at the average voltage level (0V), and the respective second terminal of which is connected to the common terminal of the first and second semiconductor switch (S1, S2) or of the third and fourth semiconductor switch (S3, S4), **characterized in that** common terminals (A12, SWP, A34) of in each case two of the first to fourth semiconductor switches (S1, S2, S3, S4) are connected to additional chokes (L2, L3, L4, L5) which form switchable paths for accepting free-wheeling currents by means of additional semiconductor switches (S5, S6, S7, S8, S9), and **in that** the common terminal (A12) of the first and second semiconductor switch (S1, S2) is connected to a second choke (L2) in order to accept free-wheeling currents during the output of active power, the second terminal of which is connected to the average voltage level (0V) by way of a third diode (D3) and to the positive voltage level (+Uz) by way of a fifth semiconductor switch (S5), and **in that** the common terminal (A34) of the third and fourth semiconductor switch (S3, S4) is connected to a third choke (L3), the second terminal of which is connected to the average voltage level (0V) by way of a fourth diode (D4) and to the negative voltage level (-Uz) by way of a sixth semiconductor switch (S6).

2. Inverter according to Claim 1, **characterized in that** the common terminal (SWP) of the second and third semiconductor switch (S2, S3) is connected to a fourth choke (L4) in order to accept free-wheeling currents during the output of reactive power, the second terminal of which is connected to the average voltage level (0V) by way of a seventh semiconductor switch (S7) and to the positive voltage level (+Uz) or negative voltage level (-Uz) by way of a fifth or sixth diode (D5, D6), wherein the fifth and sixth diode are connected in series and are reverse-biased between the positive and negative voltage level (+Uz, -Uz).

3. Inverter according to Claim 1, **characterized in that** the common terminal (SWP) of the second and third semiconductor switch (S2, S3) is connected to a fourth choke (L4), the second terminal of which is connected to the average voltage level (0V) by way of an eighth semiconductor switch (S8) and by way of the second diode (D2), and also by way of a ninth semiconductor switch (S9) and by way of the first diode (D1), and is also connected to the positive voltage level (+Uz) or negative voltage level (-Uz) by way of a fifth or sixth diode (D5, D6), wherein the fifth and sixth diode are connected in series and are reverse-biased between the positive and negative voltage level (+Uz, -Uz).

4. Inverter according to Claim 1, **characterized in that** the common terminal (SWP) of the second and third semiconductor switch (S2, S3) is connected to a fifth choke (L5) and a sixth choke (L6), wherein the second terminal of the fifth choke (L5) is connected to the average voltage level (0V) by way of an eighth semiconductor switch (S8) and by way of the second diode (D2) and to the positive voltage level (+Uz) by way of an eighth diode (D8), and wherein the second terminal of the sixth choke (L6) is connected to the average voltage level (0V) by way of a ninth semiconductor switch (S9) and by way of the first diode (D1) and to the negative voltage level (-Uz) by way of a ninth diode (D9).

5. Inverter according to one of the preceding claims, **characterized in that** the intermediate circuit capacitors (C1, C2) are fed from a photovoltaic installation.

## Revendications

1. Onduleur destiné à alimenter sélectivement un réseau d'alimentation en puissance active et en puissance réactive, ledit onduleur comprenant deux condensateurs de circuit intermédiaire (C1, C2) montés en série, dont la borne commune définit un niveau de tension moyen (0V) entre un niveau de tension positif (+Uz) et un niveau de tension négatif (-Uz), ainsi que des premier, deuxième, troisième et quatrième commutateurs à semi-conducteurs (S1, S2, S3, S4) munis chacun de diodes de roue libre montées en parallèle, qui sont en série dans cet ordre entre le niveau de tension positif et le niveau de tension négatif, la borne commune (SWP) des deuxième et troisième commutateurs à semi-conducteurs (S2, S3) étant reliée au réseau d'alimentation (Uac) par le biais d'une bobine de choc (L1), ainsi que des première et deuxième diodes (D1, D2) montées en série dont la borne commune est située au niveau de tension intermédiaire (0V) et dont la deuxième borne respective est reliée à la borne commune des premier et deuxième commutateurs à semi-conducteurs (S1, S2) ou des troisième et quatrième commutateurs à semi-conducteurs (S3, S4), **caractérisé en ce que** des bornes communes (A12, SWP, A34) de deux des premier à quatrième commutateurs à semi-conducteurs (S1, S2, S3, S4) sont reliées à des bobines de choc supplémentaires (L2, L3, L4, L5) qui forment des chemins commutables au moyen de commutateurs à semi-conducteurs supplémentaires (S5, S6, S7, S8, S9) et destinés au transfert de courants de roue libre et **en ce que**, pour le transfert de courants de roue libre lors de la délivrance de puissance active, la borne commune (A12) des premier et deuxième commutateurs à semi-conducteurs (S1, S2) est reliée à une deuxième bobine de choc (L2) dont la deuxième borne est reliée au niveau de tension moyen (0V) par le biais d'une troisième diode (D3) et au niveau de tension positive (+Uz) par le biais d'un cinquième commutateur à semi-conducteurs (S5), et **en ce que** la borne commune (A34) des troisième et quatrième commutateurs à semi-conducteurs (S3, S4) est reliée à une troisième bobine de choc (L3) dont la deuxième borne est reliée au niveau de tension moyen (0V) par le biais d'une quatrième diode (D4) et au niveau de tension négatif (-Uz) par le biais d'un sixième commutateur à semi-conducteurs (S6).

2. Onduleur selon la revendication 1, **caractérisé en ce que**, pour le transfert de courants de roue libre lors de la délivrance de la puissance réactive, la borne commune (SWP) des deuxième et troisième commutateurs à semi-conducteurs (S2, S3) est reliée à une quatrième bobine de choc (L4) dont la deuxième borne est reliée au niveau de tension moyen (0V) par le biais d'un septième commutateur à semi-conducteurs (S7) et au niveau de tension positif (+Uz) ou au niveau de tension négatif (-Uz) par le biais d'une cinquième ou sixième diode (D5, D6), les cinquième et sixième diodes étant montées en série et en sens bloquant entre les niveaux de tension positif et négatif (+Uz, -Uz).

3. Onduleur selon la revendication 1, **caractérisé en ce que** la borne commune (SWP) des deuxième et troisième commutateurs à semi-conducteurs (S2, S3) est reliée à une quatrième bobine de choc (L4) dont la deuxième borne est reliée au niveau de tension moyen (0V) par le biais d'un huitième commutateur à semi-conducteurs (S8) et par le biais de la deuxième diode (D2), ainsi que par le biais d'un neuvième commutateur à semi-conducteurs (S9) et par le biais de la première diode (D1), et en outre est reliée au niveau de tension positif (+Uz) ou au niveau de tension négatif (-Uz) par le biais d'une cinquième ou sixième diode (D5, D6), les cinquième et sixième diodes étant montées en série et en sens bloquant entre les niveaux de tension positif et négatif (+Uz, -Uz).

4. Onduleur selon la revendication 1, **caractérisé en ce que** la borne commune (SWP) des deuxième et troisième commutateurs à semi-conducteurs (S2, S3) est reliée à une cinquième bobine de choc (L5) et une sixième bobine de choc (L6), la deuxième borne de la cinquième bobine de choc (L5) étant reliée au niveau de tension moyen (0V) par le biais d'un huitième commutateur à semi-conducteurs (S8) et par le biais de la deuxième diode (D2) et au niveau de tension positif (+Uz) par le biais d'une huitième diode (D8), et la deuxième borne de la sixième bobine de choc (L6) étant reliée au niveau de tension moyen (0V) par le biais d'un neuvième commutateur à semi-conducteurs (S9) et par le biais de la première diode (D1) et au niveau de tension négatif (-Uz) par le biais d'une neuvième diode (D9).

5. Onduleur selon l'une des revendications précédentes, **caractérisé en ce que** les condensateurs de circuit intermédiaire (C1, C2) sont alimentés à partir d'une installation photovoltaïque.
